(19) Europäisches Patentamt
European Patent Office
Office européen des brevets

(11) **EP 4 150 006 B1**

(12) **EUROPÄISCHE PATENTSCHRIFT**

(45) Veröffentlichungstag und Bekanntmachung des Hinweises auf die Patenterteilung:
**04.06.2025  Patentblatt 2025/23**

(21) Anmeldenummer: **21725095.0**

(22) Anmeldetag: **07.05.2021**

(51) Internationale Patentklassifikation (IPC):
***C08L 75/06*** (2006.01)    ***C08L 75/08*** (2006.01)

(52) Gemeinsame Patentklassifikation (CPC):
**C08L 75/06; C08L 75/08**

(86) Internationale Anmeldenummer:
**PCT/EP2021/062163**

(87) Internationale Veröffentlichungsnummer:
**WO 2021/228715 (18.11.2021 Gazette 2021/46)**

(54) **VERFAHREN ZUR HERSTELLUNG VON THERMOPLASTISCHEN POLYURETHANEN**

METHOD FOR MANUFACTURING THERMOPLASTIC POLYURETHANES

PROCÉDÉ DE FABRICATION DE POLYURÉTHANES THERMOPLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.05.2020  EP 20174032**

(43) Veröffentlichungstag der Anmeldung:
**22.03.2023  Patentblatt 2023/12**

(73) Patentinhaber: **Covestro Deutschland AG**
**51373 Leverkusen (DE)**

(72) Erfinder:
• **WAMPRECHT, Christian**
**41472 Neuss (DE)**
• **SHAFIQ, Faisal**
**47807 Krefeld-Fischeln (DE)**
• **BELLINGHAUSEN, Rainer**
**51519 Odenthal (DE)**
• **STEIN, Joerg**
**41542 Dormagen (DE)**
• **REICHERT, Peter**
**41541 Dormagen (DE)**

(74) Vertreter: **Levpat**
**c/o Covestro AG**
**Gebäude K12**
**51365 Leverkusen (DE)**

(56) Entgegenhaltungen:
JP-B2- 3 602 668     US-A- 5 780 573
US-A1- 2005 043 492     US-A1- 2009 326 108

**Beschreibung**

Die vorliegende Erfindung betrifft ein Verfahren zur Behandlung von thermoplastischem Polyurethan, das behandelte thermoplastische Polyurethan und dessen Verwendung.

Thermoplastische Polyurethane (TPU) finden eine breite Anwendung, weil sie gute Elastomereigenschaften aufweisen und leicht thermoplastisch weiterverarbeitet werden können. Durch geeignete Auswahl der Komponenten lässt sich eine große Variationsbreite mechanischer Eigenschaften erzielen. Eine Übersicht über TPU, ihre Eigenschaften und Anwendungen werden z.B. in Kunststoffe 68 (1978)819, Kautschuk, Gummi, Kunststoffe 35 (1982) 569; G. Becker, D. Braun: Kunststoff-Handbuch, Bd. 7 "Polyurethane" München, Wien, Carl Hanser Verlag 1983 gegeben. Einen Überblick über die unterschiedlichen Herstellverfahren gibt Plastikverarbeiter 40 (1989). Die wichtigsten technischen Verfahren zur Herstellung von TPU sind das Extruderverfahren (DE 1 964 834) und das Mischkopf-Band-Verfahren (GB 1,057,018).

TPU werden zumeist aus linearen Polyolen, wie Polyester-, Polyether- oder Polycarbonatpolyolen, organischen Diisocyanaten und kurzkettigen zumeist difunktionellen Alkoholen (Kettenverlängerern) aufgebaut. Daneben kommen ggf. noch Additive, Katalysatoren, Farbstoffe und Füllstoffe zum Einsatz. TPU können diskontinuierlich oder kontinuierlich hergestellt werden.

Üblicherweise werden die TPU nach der Herstellung aus einem Reaktionsextruder in Form von Polymersträngen ausgetragen, die dann auf einem Kühlband mit Wasser abgekühlt und anschließend in einem Granulator granuliert werden (Stranggranulation). Alternativ kann die Granulation auch in einem direkt an den Reaktionsextruder angeschlossenen Granulator erfolgen, wobei die Granulierung in Gegenwart von Kühlwasser erfolgt (zum Beispiel Unterwassergranulation). Durch diese Verfahrensschritte haftet noch eine gewisse Restfeuchtigkeit an den erhaltenen Granulaten, sodass häufig ein Trocknungsvorgang notwendig ist. Dazu können die Granulate in einem nachgeschalteten Trockner getrocknet werden. Anschließend können sie in die gewünscht Verpackung abgefüllt werden.

Durch diese Art der Granulatbehandlung kommt es jedoch häufig zu Schwankungen bei der Produktqualität aufgrund von noch vorhandener Restfeuchte und nicht vollständig abreagierten reaktiven Gruppen, insbesondere Isocyanatgruppen. Diese restlichen Isocyanatgruppen können mit noch vorhandenen Wassermolekülen aus der Restfeuchte der Granulate reagieren, wobei unter Abspaltung von Kohlendioxid primäre Aminogruppen entstehen. Diese Aminogruppen können nicht mehr zum weiteren Molekulargewichtsaufbau beitragen, sodass das anvisierte endgültige Molekulargewicht des TPU nicht mehr erreicht werden kann. Dadurch wird häufig das mechanische Eigenschaftsniveau der TPU, das maßgeblich von deren Molekulargewicht abhängt, negativ beeinflusst. In einem weiteren möglichen Reaktionsschritt können die Aminogruppen auch noch mit eventuellen vorhandenen, geringsten Mengen an freien Isocyanatgruppen zu Harnstoffgruppen abreagieren. Harnstoffgruppierungen sind im Vergleich zu Urethangruppen deutlich höher schmelzende Gruppierungen, die bei Extrusionsverarbeitungen von TPU dann häufig zu nicht aufgeschmolzenen Partikeln in Filmen oder Folien führen, was deren Qualität deutlich mindert oder die Extrusionsartikel sogar unbrauchbar machen kann.

US 2005/043492 A1 offenbart die Trocknung von TPU-Pellets mittels eines Entfeuchtungstrockners bei 70 °C für 5 Stunden. Der Einlassluft-Taupunkt wird mit -70 °C angegeben.

JP 3 602668 B2 offenbart die Trocknung von Polyurethan-Pellets bei 80 °C für 10 Stunden. Der Taupunkt der Atmosphäre wird mit -30 °C angegeben.

US 2009/326108 A1 offenbart die Trocknung von TPU-Pellets mittels eines Entfeuchtungstrockners bei 70 °C für 5 Stunden. Der Einlassluft-Taupunkt wird mit -50 °C angegeben.

US 5,780,573 offenbart die Trocknung von Polyurethan-Fasern bei 80 °C für 10 Stunden. Der Taupunkt der Atmosphäre wird mit -30 °C angegeben.

Es war daher die Aufgabe, ein Verfahren zur Behandlung von TPU zur Verfügung zu stellen, das sicherstellt, dass die TPU-Granulate vor der Verpackung in geeignete Verpackungsbehältnisse möglichst vollständig chemisch ausreagiert sind und damit Nachteile, wie z. B. schwankende Produktqualität, wie z. B. schlechte Extrusionsqualität und unzureichende mechanische Eigenschaften, vermieden werden können.

Erfindungsgemäß wird diese Aufgabe gelöst durch ein Verfahren gemäß Anspruch 1 zur Behandlung von thermoplastischem Polyurethan, wobei die Behandlung die folgenden Schritte umfasst:

I) Bereitstellen des thermoplastischen Polyurethans (TPU-1) erhältlich oder erhalten durch Umsetzung von wenigstens einem Polyisocyanat mit wenigstens einem Polyol, und

II) Aussetzen des thermoplastischen Polyurethans (TPU-1) einer Temperatur im Bereich von 10 °C bis 150 °C unter einer Gasatmosphäre, wobei das Gas der Gasatmosphäre einen Taupunkt von ≤ - 10 °C aufweist, unter Erhalt eines behandelten thermoplastischen Polyurethans (TPU-2 dadurch gekennzeichnet, dass Schritt II) in einem Behälter oder Silo erfolgt und das thermoplastische Polyurethan (TPU-1) über einen Schlauch und / oder eine Rohrleitung dem Behälter oder Silo für Schritt 11) zugeführt wird, wobei weiterhin der Schlauch und / oder die Rohrleitung jeweils eine Gasatmosphäre aufweisen und das Gas der Gasatmosphäre einen Taupunkt von < - 10 °C aufweist.

Es wurde überraschend gefunden, dass so behandeltes thermoplastisches Polyurethan (TPU-2) eine reproduzierbare Produktqualität und reproduzierbare mechanische Eigenschaften aufweist, sowie chemisch nahezu vollständig ausreagiert ist. Weiterhin wurde überraschend gefunden, dass der Polymerisationsgrad durch das erfindungsgemäße Verfahren erhöht wird. Dabei ist es erfindungswesentlich, dass das thermoplastische Polyurethan (TPU-1) unter einer Gasatmosphäre getempert wird, dessen Gas einen Taupunkt von ≤ - 10 °C aufweist.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Bevorzugt bedeuten erfindungsgemäß die Ausdrücke "umfassend" oder "enthaltend", "im Wesentlichen bestehend aus" und besonders bevorzugt "bestehend aus".

Im Rahmen der Erfindung kann das thermoplastische Polyurethan (TPU-1) auch durch die Umsetzung von mehreren unterschiedlichen Polyisocyanaten, vorzugsweise Diisocyanaten, mit mehreren unterschiedlichen Polyolen erhalten werden oder erhalten worden sein. Im Rahmen der Erfindung kann das thermoplastische Polyurethan (TPU-1) auch durch die Umsetzung von mehreren unterschiedlichen Polyisocyanaten, vorzugsweise Diisocyanaten, mit mehreren unterschiedlichen Polyolen und mit einem oder mehreren Kettenverlängerern, vorzugsweise Diolen mit einem Molekulargewicht von kleiner gleich 500 g/mol, erhalten werden oder erhalten worden sein.

In einer bevorzugten Ausführungsform des erfindungsgemäßen Verfahrens hat das thermoplastische Polyurethan (TPU-1) vor der Bereitstellung in Schritt I) ein mehrstufiges Verfahren umfassend die folgenden Schritte durchlaufen hat:

> a) Extrudieren des thermoplastischen Polyurethans (TPU-1),
> b) Granulieren des extrudierten thermoplastischen Polyurethans (TPU-1) aus Schritt a), und
> c) Trocknen des thermoplastischen Polyurethans (TPU-1) aus Schritt b).

Die Umsetzung des wenigstens einen Polyisocyanats mit dem wenigstens einen Polyol vor der Extrusion gemäß Schritt a) können beispielsweise in einem Reaktivextruder, einem dem Extruder vorgeschalteten Aggregat, das mit Statikmischern bestückt ist, oder einem Mischkopf erfolgen. Vorzugsweise finden beide Schritte in einem Reaktivextruder statt. Die Umsetzung und Extrusion erfolgen bei Temperaturen im Bereich von 100 °C bis 250 °C. Die Granulation erfolgt beispielsweise mittels Stranggranulation oder Unterwassergranulation, wobei das extrudierte thermoplastische Polyurethan (TPU-1) vor der Granulierung vorzugsweise auf kleiner 100 °C abgekühlt wird. Zum Trocken des granulierten thermoplastischen Polyurethans können beispielsweise Schwingsiebabsauger und Zentrifugaltrockner verwendet werden.

Zur Herstellung des thermoplastischen Polyurethans (TPU-1) kommt wenigstens ein Polyol und wenigstens ein organisches Polyisocyanat, vorzugsweise wenigstens ein Diisocyanat und ggf wenigstens ein kurzkettiges Diol (Kettenverlängerer) als Hauptaufbaukomponenten zum Einsatz. In einer bevorzugten Ausführungsform wird das thermoplastische Polyurethan (TPU-1) durch Umsetzung von wenigstens einem Polyisocyanat mit wenigstens einem Polyol und mit wenigstens einem Kettenverlängerer erhalten. In einer anderen bevorzugten Ausführungsform wird das thermoplastische Polyurethan (TPU-1) durch Umsetzung von wenigstens einem Diisocyanat mit wenigstens einem Polyol und mit wenigstens einem Kettenverlängerer erhalten.

Zur Beschleunigung der TPU-Bildungsreaktion können zusätzlich Katalysatoren zugesetzt werden. Zur Erzielung bestimmter Beständigkeiten gegen Witterungseinflüsse, UV-Licht, Hydrolyse, Oxidation, Abrieb, Verschmutzung sowie zur Verbesserung von Verarbeitungseigenschaften kommen gegebenenfalls Additive, Hilfs- und Zusatzstoffe zum Einsatz. Gegebenenfalls können auch monofunktionelle Kettenabbrecher zum Einsatz kommen. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte mit Härten im Bereich von 45 Shore A bis 85 Shore D.

Die Herstellung des thermoplastischen Polyurethans (TPU-1) kann nach den bekannten Verfahren kontinuierlich, beispielsweise mit Reaktionsextrudern oder dem Bandverfahren nach one-shot oder dem Prepolymerverfahren, oder diskontinuierlich nach dem bekannten Prepolymerprozess erfolgen. Bei diesen Verfahren können die zur Reaktion kommenden Komponenten nacheinander oder gleichzeitig miteinander vermischt werden, wobei die Reaktion unmittelbar einsetzt. Beim Extruderverfahren werden die Aufbaukomponenten sowie gegebenenfalls Katalysatoren und/oder weitere Hilfs- und Zusatzstoffe einzeln oder als Gemisch in den Extruder eingeführt, z. B. bei Temperaturen von 100 bis 280°C, vorzugsweise 140 bis 250°C zur Reaktion gebracht, das erhaltene TPU wird extrudiert, abgekühlt und granuliert.

Geeignete Herstellungsverfahren für thermoplastische Polyurethane werden beispielsweise offenbart in EP 0 922 552 A1, DE 101 03 424 A1 oder WO 2006/072461 A1. Die Herstellung erfolgt üblicherweise auf einer Bandanlage oder einem Reaktionsextruder, kann aber auch im Labormaßstab, beispielsweise im Handgussverfahren, erfolgen. In Abhängigkeit der stofflichen Eigenschaften der Komponenten werden diese alle unmittelbar miteinander vermischt oder es werden einzelne Komponenten vorvermischt und/oder vorreagiert, z.B. zu Präpolymeren, und dann erst zur Polyaddition gebracht. In einer weiteren Ausführungsform wird zunächst ein thermoplastisches Polyurethan aus den Aufbaukomponenten, ggf. mit Katalysator hergestellt, in das ggf. noch Hilfsstoffe eingearbeitet sein können. Das homogene Verteilen erfolgt vorzugsweise in einem Extruder, bevorzugt in einem Zweiwellenextruder.

Zur Herstellung der erfindungsgemäßen thermoplastischen Polyurethane werden die Aufbaukomponenten bevorzugt in Gegenwart von Katalysatoren und gegebenenfalls Hilfsmitteln und/oder Zusatzstoffen üblicherweise in solchen Mengen zur Reaktion gebracht, dass das Äquivalenzverhältnis von NCO-Gruppen der Diisocyanate zur Summe der Hydroxylgruppen der eingesetzten Komponenten 0,95 bis 1 ,05 : 1 , vorzugsweise 0,97 bis 1 ,03 : 1 , weiter bevorzugt 0,98 bis 1,02 : 1 beträgt.

Als Polyole eignen sich alle dem Fachmann bekannten Polyole, vorzugsweise lineare hydroxylterminierte Polyole, mit einem zahlenmittleren Molekulargewicht (Mn) von 500 bis 5000 g/mol. Häufig spricht man daher auch von "im wesentlichen linearen Polyolen". Bevorzugt sind Polyesterdiole, Polyetherdiole, Polyetheresterdiole, Polycaprolactondiole, Polycarbonatdiole, Polyethercarbonatdiole oder Gemische aus diesen. Die Molekulargewichte solcher Polyole werden üblicherweise über deren OH-Zahl (Hydroxylzahl) errechnet, was dem Fachmann bekannt ist. Die OH-Zahl wird nach der DIN 53240 titrimetisch bestimmt. Aus der OH-Zahl (OHZ) lässt sich nach folgender Formel das Molgewicht von Polyolen ausrechnen:

$$\mathrm{Mn} = 1000\mathrm{mg/g} \cdot \frac{z \cdot 56.106\mathrm{g/Mol}}{\mathrm{OHZ[mg/g]}}$$

Dabei steht z für die Anzahl an OH-Gruppen im Makromolekül. Für ein lineares Diol ist z = 2. Produktionsbedingt enthalten diese oft kleine Mengen an nichtlinearen Verbindungen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 12, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 1,12-Dodecandiol, 2,2-Dimethyl-1,3-propandiol, 1,3-Propandiol, und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol und/oder 1,6-Hexandiol. Solche Ester der Kohlensäure bezeichnet man auch als Polycarbonatdiole. Weiterhin als Ester geeignet sind Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate sowie Polycaprolactone. Die Polyester-Diole besitzen ein zahlenmittleres Molekulargewicht (Mn) von 500 bis 5000 g/mol, Vorzugsweise 600 bis 4000 g/mol und besonders bevorzugt 800 bis 3000 g/mol. Sie können einzeln oder in Form von Mischungen untereinander zur Anwendung kommen. Die Molekulargewichte solcher Diole werden üblicherweise über deren OH-Zahl errechnet, wie oben erläutert.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole , wie Ethylenglykol, 1,2-Propandiol, 1,3-Propandiol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 20 Gew.% bezogen auf die bifunktionellen Polyether eingesetzt werden, jedoch höchstens in solcher Menge, dass ein thermoplastisch verarbeitbares Produkt entsteht . Die im wesentlichen linearen Polyether-Diole besitzen ein zahlenmittleres Molekulargewicht (Mn) von 500 bis 18000 g/mol, vorzugsweise 750 bis 12000 und besonders bevorzugt 900 bis 4200 g/mol. Sie können sowohl einzeln als auch in Form von Mischungen untereinander zur Anwendung kommen. Die Molekulargewichte solcher Diole werden üblicherweise über deren OH-Zahl errechnet, wie oben erläutert.

Geeignete Polyetherester können beispielsweise hergestellt werden durch Umsetzung von kurzkettigen Polyetherdiolen, wie z. B. Polytetrahydrofuranen mit Molekulargewichten von 250 bis 1000 g/mol mit organischen Dicarbonsäuren, wie beispielsweise Bernsteinsäure oder Adipinsäure. Die Polyetheresterdiole besitzen ein zahlenmittleres Molekulargewicht (Mn) von 600 bis 5000 g/mol, vorzugsweise 700 bis 4000 g/mol und besonders bevorzugt 800 bis 3000 g/mol. Sie können einzeln oder in Form von Mischungen untereinander zur Anwendung kommen. Die Molekulargewichte solcher Diole werden üblicherweise über deren OH-Zahl errechnet, wie oben erläutert.

Geeignete Polycarbonatdiole können beispielsweise hergestellt werden durch Umsetzung von kurzkettigen Diolen, wie z. B. 1,4-Butandiol oder 1,6-Hexandiol mit Diphenylcarbonat oder Dimethylcarbonat unter Zuhilfenahme von Katalysatoren und Abspaltung von Phenol oder Methanol. Die Polycarbonatdiole besitzen ein zahlenmittleres Molekulargewicht (Mn) von 500 bis 6000 g/mol, vorzugsweise 750 bis 4000 g/mol und besonders bevorzugt 800 bis 3000 g/mol. Die Molekulargewichte solcher Diole werden üblicherweise über deren OH-Zahl errechnet, wie oben erläutert. Sie können einzeln oder in Form von Mischungen untereinander zur Anwendung kommen.

Geeignete Polyethercarbonatdiole können beispielsweise hergestellt werden durch Umsetzung von kurzkettigen Polyetherdiolen, wie z. B. Polytetrahydrofuranen mit Molekulargewichten von 250 bis 1000 g/mol mit Diphenyl- oder Dimethylcarbonat unter Zuhilfenahme von Katalysatoren und Abspaltung von Phenol oder Methanol. Weiterhin können Polyethercarbonatdiole hergestellt werden durch Copolymerisation von Alkylenoxiden, wie z. B. Ethylenoxid oder Propylenoxid oder Gemischen davon, mit Kohlendioxid unter Zuhilfenahme von geeigneten Katalysatoren, wie z. B. Doppelmetallcyanidkatalysatoren. Die Polyethercarbonatdiole besitzen ein zahlenmittleres Molekulargewicht (Mn) von 500 bis 8000 g/mol, vorzugsweise 750 bis 6000 g/mol und besonders bevorzugt 1000 bis 4500 g/mol Die Molekulargewichte solcher Diole werden üblicherweise über deren OH-Zahl errechnet, wie oben erläutert.

Als Polyisocyanate, vorzugsweise organische Diisocyanate, kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden. Dabei ist es unerheblich, ob die Polyisocyanate und Diisocyanate mittels Phosgenierung oder nach einem phosgenfreien Verfahren erhalten wurden. Die Polyisocyanate und Diisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei das 1,6-Hexamethylendiamin und das 1,5-Pentamethylendiamin aus biologischen Quellen, vorzugsweise durch bakterielle Fermentation, gewonnen werden.

Im Einzelnen seien beispielhaft genannt: aliphatische Diisocyanate, wie 1,6-Hexamethylendiisocyanat, 1,5-Pentamethylendiisocyanat und 1,10-Decandiisocyanat, cycloaliphatische Diisocyanate, wie Isophorondiisocyanat, 1,4-Cyclohexandiisocyanat, 1-Methyl-2,4- und -2,6-cyclohexandiisocyanat sowie die entsprechenden Isomerengemische, 4,4'-, 2,4'- und 2,2'-Dicyclohexylmethandiisocyanat sowie die entsprechenden Isomerengemische und aromatische Diisocyanate, wie 2,4-Toluylendiisocyanat, Gemische aus 2,4- und 2,6-Toluylendiisocyanat, 4,4'-Diphenylmethandiisocyanat, 2,4'- Diphenylmethandiisocyanat und 2,2'-Diphenylmethandiisocyanat, Gemische aus 2,4'- Diphenylmethandiisocyanat und 4,4'-Diphenylmethandiisocyanat, urethanmodifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, 4,4'-Dicyclohexylmethandiisocyanat, Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 % (berechnet auf Gesamt-Diisocyanat), aber höchstens so viel eines Polyisocyanates, dass ein thermoplastisch verarbeitbares Produkt entsteht, verwendet werden. Beispiele sind Triphenylmethan-4,4',4"-triisocyanat und Polyphenyl-polymethylenpolyisocyanate.

Als kurzkettige Kettenverlängerungsmittel können Diole oder Diamine mit einem Molekulargewicht von 60 bis 500 eingesetzt werden, vorzugsweise aliphatische Diole mit 2 bis 14 Kohlenstoffatomen, wie z.B. Ethandiol, 1,3-Propandiol, 1,5-Pentandiol, 1,6-Hexandiol, 1,8-Octandiol, 1-10-Decandiol, 1,12-Dodecandiol, Diethylenglykol, Dipropylenglykol und insbesondere 1,4-Butandiol. Geeignet sind jedoch auch Diester der Terephthalsäure mit Glykolen mit 2 bis 4 Kohlenstoffatomen, wie z.B. Terephthalsäure-bis-ethylenglykol oder Terephthalsäure-bis-1,4-butandiol, Hydroxyalkylenether des Hydrochinons, wie z.B. 1,4-Di(β-hydroxyethyl)-hydrochinon, ethoxylierte Bisphenole, wie z.B. 1,4-Di-(β-hydroxyethyl)-bisphenol A, (cyclo)aliphatische Diamine, wie z.B. Isophorondiamin, Ethylendiamin, 1,2- Propylen-diamin, 1,3-Propylendiamin, N-Methylpropylen-1,3-diamin, N,N'-Dimethylethylendiamin und aromatische Diamine, wie z.B. 2,4-Toluylendiamin und 2,6-Toluylendiamin, 3,5-Diethyl-2,4-toluylendiamin und/oder 3,5-Diethyl -2,6-toluylendiamin und primäre mono-, di-, tri- und/oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden, aber höchstens so viel eines Triols, dass ein thermoplastisch verarbeitbares Produkt entsteht.

Als Katalysatoren können die üblichen aus der Polyurethanchemie bekannten Katalysatoren eingesetzt werden.

Geeignete Katalysatoren sind an sich bekannte und übliche tertiäre Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-[2,2,2]-octan, und ähnliche sowie insbesondere organische Metallverbindungen wie Titanverbindungen, Eisenverbindungen, Wismutverbindungen, Zinkverbindungen, Zirkonverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Wismutverbindungen, Zirkonverbindungen, Eisen- oder Zinnverbindungen. Ganz besonders bevorzugt sind Dibutylzinndilaurat, Zinndioctoat und Titansäureester.

Als Additive, Hilfs- und Zusatzstoffe können beispielsweise Gleitmittel, wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe, Nukleierungsmittel und Verstärkungsmittel eingesetzt werden. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzmittel sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R.Gächter, H.Müller (Ed.): Taschenbuch der Kunststoff-Additive, 3.Ausgabe, Hanser Verlag, München 1989, oder DE-A 29 01 774.

Als monofunktionelle Kettenabbrecher können Monoalkohole wie z. B. 1-Butanol, 1-Hexanol, 1-Oktanol und Stearylalkohol oder Monoamine, wie z. b. 1-Butylamin oder Stearylamin eingesetzt werden, um ein bestimmtes TPU-Molekulargewicht einzustellen. Diese dienen teilweise auch als Entformungshilfen.

Eine Gasatmosphäre mit einem Gas, das einen Taupunkt von $\leq$ - 10 °C aufweist, lässt sich durch Entfeuchten oder befeuchten von Gas erreichen, je nachdem welchen Taupunkt das Gas vor der Behandlung aufweist. Die Bestimmung des Taupunktes des Gases kann beispielsweise mit einem Taupunktspiegelhygrometer erfolgen. Entfeuchtung des Gases kann mit verschiedensten Trockner erfolgen, beispielsweise mit Kondensationstrocknern oder Absorptionstrockner. Als besonders wirkungsvoll hat sich die Verwendung von Rotationsentfeuchtern als Adsorptionstrockner erwiesen. Dabei wird der feuchte Gasstrom durch ein rotierendes, mit Adsorptionsmittel beschichtetes, Sorptionsrad geleitet und auf diese Weise getrocknet. Auf der Gegenseite wird das Rad regeneriert, um das kontinuierliche Aufbereiten des zu trocknenden Gases effektiv zu gewährleisten. Durch Erweiterung der Anlagentechnik, beispielsweise mit Vor- und Nachkühlermodulen, können Taupunkte bis -65 °C und somit eine relative Prozessgasfeuchte von 0,05% erreicht werden. Der Taupunkt der Gasatmosphäre kann direkt am Adsorptionstrockner als erwünschter Taupunkt eingestellt werden. Der Adsorptionstrockner arbeitet dann kontinuierlich unter Erzeugung eines Prozessgases mit dem gewählten Taupunkt. Adsorptionstrockner haben spezielle Funktionen, z. B. erfolgt das Trocknen bis ein festgelegter Taupunkt (°C) erreicht wird, der mit externen, mit dem Gerät verbundenen Sensoren gemessen wird.

In einer bevorzugten Ausführungsform des erfindungsgemäßen Verfahrens weist das Gas der Gasatmosphäre einen Taupunkt von $\leq$ - 15 °C, vorzugsweise von $\leq$ - 20 °C, und besonders bevorzugt von $\leq$ - 25 °C auf. In einer weiteren bevorzugten Ausführungsform des erfindungsgemäßen Verfahrens weist das Gas einen Taupunkt im Bereich von - 10 °C bis - 40 °C, vorzugsweise im Bereich von - 15 °C bis - 35 °C und besonders bevorzugt im Bereich von - 20 °C bis - 30 °C auf.

In einer bevorzugten Ausführungsform des erfindungsgemäßen Verfahrens wird das thermoplastische Polyurethan (TPU-1) der Temperatur für einem Zeitraum von 1 Stunde bis 12 Stunden, vorzugsweise einem Zeitraum von 2 Stunden bis 10 Stunden, besonders bevorzugt einem Zeitraum von 3 Stunden bis 9 Stunden, ganz besonders bevorzugt einem Zeitraum von 4 Stunden bis 8 Stunden und noch bevorzugter einem Zeitraum von 4 Stunden bis 7 Stunden unter Gasatmosphäre ausgesetzt.

In einer bevorzugten Ausführungsform des erfindungsgemäßen Verfahrens ist das Gas der Gasatmosphäre Luft, ein inertes Gas, oder ein Gemisch aus Luft und einem inerten Gas, wobei das inerte Gas vorzugsweise ausgewählt ist aus der Gruppe bestehend aus Stickstoff, Kohlenstoffdioxid, Argon und / oder einer Mischung aus mindestens zwei hiervon.

In einer bevorzugten Ausführungsform des erfindungsgemäßen Verfahrens wird der Taupunkt des Gases der Gasatmosphäre in Schritt II) bei Eintritt in die Vorrichtung konstant gehalten. Vorzugsweise ist der Taupunkt des Gases der Gasatmosphäre in Schritt II) und der Taupunkt des Gases der Gasatmosphäre in dem Schlauch und / oder der Rohrleitung, über die das thermoplastische Polyurethan (TPU-1) der Vorrichtung für Schritt II) zuführt wird, im Wesentlichen konstant, d.h. die Gasatmosphäre in der Vorrichtung für Schritt II) und der Zuführungsmittel (Schlauch und / oder Rohr) weist bei der eingestellten Temperatur in der Vorrichtung einen im Wesentlichen konstanten Taupunkt auf.

Dies hat den Vorteil, dass das thermoplastische Polyurethan (TPU-2) eine noch bessere Produktkonstanz aufweist. Dies macht sich insbesondere nach der Verarbeitung der (TPU-2) in den mechanischen Eigenschaften und der Extrusionsqualität von extrudierten Folien und Filmen positiv bemerkbar.

In einer bevorzugten Ausführungsform des erfindungsgemäßen Verfahrens liegt der Druck der Gasatmosphäre im Bereich von 0,01 bar absolut bis 5,0 bar absolut, vorzugsweise im Bereich von 0,1 bar absolut bis 4,5 bar absolut und besonders bevorzugt bei 0,2 bis 3,5 bar absolut. "Bar absolut" im Sinne der Erfindung bedeutet den gemessenen Druck gegenüber dem Druck Null im leeren Raum (Vakuum).

In einer bevorzugten Ausführungsform des erfindungsgemäßen Verfahrens wird das thermoplastische Polyurethan (TPU-1) einer Temperatur im Bereich von 20 °C bis 150 °C, vorzugsweise im Bereich von 25 °C bis 130 °C, besonders bevorzugt im Bereich von 30 °C bis 110 °C und ganz besonders bevorzugt im Bereich von 30 °C bis 100 °C unter Gasatmosphäre ausgesetzt.

Im erfindungsgemäßen Verfahrens erfolgt Schritt II) in einem Behälter oder Silo. Beispielsweise kann das thermoplastisches Polyurethan (TPU-1) nach der Granulierung und Trocknung in einem nachgeschalteten Trockner durch Förderleitungen in beispielsweise ein Silo gefördert und für mehrere Stunden unter Umwälzung bei Temperaturen von 10 bis 100 °C in Gegenwart von Luft, die mit einem zuvor eingestellten, vorzugsweise konstanten, Taupunkt von ≤ - 10 °C dem Silo über Rohrleitungen zugeführt wurde, getempert werden. Dabei ist es vorteilhaft wenn auch für den Transport des thermoplastischen Polyurethans (TPU-1) durch die Transportleitungen zu der Vorrichtung, beispielsweise einem Tempersilo, ein Gas mit einem zuvor eingestellten, vorzugsweise konstanten, Taupunkt von ≤ - 10 °C verwendet wird. Das thermoplastische Polyurethan (TPU-1) kann beispielsweise durch einen Luftstrom bewegt und gefördert werden, der entweder durch Anlegen eines Vakuums an eine Transportleitung verursacht wird, wodurch ein Luftstrom mit einem zuvor eingestellten Taupunkt von ≤ - 10 °C in die Leitung gelangt oder durch Druckluft verursacht wird.

Im erfindungsgemäßen Verfahren wird das thermoplastische Polyurethan (TPU-1) über einen Schlauch und / oder eine Rohrleitung dem Behälter oder Silo für Schritt II) zugeführt, wobei der Schlauch und / oder die Rohrleitung jeweils eine Gasatmosphäre aufweisen und das Gas der Gasatmosphäre einen Taupunkt von ≤ - 10 °C aufweist. Gemäß einer bevorzugten Ausführungsform weisen der Schlauch und / oder die Rohrleitung jeweils eine Temperatur im Bereich von 10 °C bis 100 °C auf. Dies hat den Vorteil, dass das vorgetrocknete thermoplastische Polyurethan (TPU-1) beim Transport in die Vorrichtung von Schritt II) nicht mehr mit Feuchtigkeit und / oder schwankenden Umgebungsbedingungen in Kontakt kommt und es somit nicht mehr zu schwankenden Produktqualitäten und damit einem Qualitätsverlust durch unkontrollierte Nebenreaktionen kommt. Ein solcher Qualitätsverlust ist vor allem dann zu beobachten, wenn der Taupunkt der Gasatmosphäre stark schwankt und / oder über - 10 °C liegt, also keine konstanten Umgebungsbedingungen vorliegen, wie beispielsweise hervorgerufen durch den saisonalen Einfluss des Wetters am Produktionsstandort.

In einer bevorzugten Ausführungsform des erfindungsgemäßen Verfahrens weist die Vorrichtung, der Schlauch, die Rohrleitung und / oder die Gasatmosphäre eine Temperatur im Bereich von 10 °C bis 100 °C auf.

In einer weiteren bevorzugten Ausführungsform des erfindungsgemäßen Verfahrens ist der Druck der Gasatmosphäre in der Vorrichtung, dem Schlauch und / oder der Rohrleitung konstant.

In einer bevorzugten Ausführungsform des erfindungsgemäßen Verfahrens wird das thermoplastische Polyurethan (TPU-1 und TPU-2) von dem Gas der Gasatmosphäre umströmt, vorzugsweise durch das Gas umgewälzt. Dies hat den Vorteil, dass das thermoplastische Polyurethan gleichmäßig erwärmt wird und eine gleichmäßige Wärmeverteilung aufweist. Durch die Umwälzung wird verhindert, dass es zu Toträumen zwischen dem thermoplastischen Polyurethan (TPU-1 und TPU-2), insbesondere dem thermoplastischen Polyurethan-Granulat, kommt und somit eine gleichmäßige und effiziente Trocknung gewährleistet werden kann. Weiterhin wird durch die Umwälzung verhindert, dass die einzelnen thermoplastischen Polyurethan-Granulate miteinander verkleben und es damit nicht zu einer Verklumpung der thermoplastischen Polyurethan-Granulate kommt.

In einer bevorzugten Ausführungsform des erfindungsgemäßen Verfahrens liegt das Verhältnis von dem Volumen des Gases der Gasatmosphäre zu dem Volumen des thermoplastischen Polyurethans (TPU-1) im Bereich von 1 bis 1000, vorzugsweise im Bereich von 1,5 bis 500, und besonders bevorzugt im Bereich von 2 bis 100. In einer weiteren bevorzugten Ausführungsform des erfindungsgemäßen Verfahrens liegt das Verhältnis von dem Volumen des Gases der Gasatmosphäre zu dem Volumen des thermoplastischen Polyurethans (TPU-1 und TPU-2) im Bereich von 1 bis 1000, vorzugsweise im Bereich von 1,5 bis 500, und besonders bevorzugt im Bereich von 2 bis 100.

In einer bevorzugten Ausführungsform des erfindungsgemäßen Verfahrens ist der NCO-Gruppengehalt des thermoplastischen Polyurethans (TPU-2) um mindestens 30 %, vorzugsweise um mindestens 40 % und besonders bevorzugt um mindestens 50% geringer, als der NCO-Gruppengehalt des thermoplastischen Polyurethans (TPU-1), wobei der NCO-Gruppengehalt angelehnt an die DIN EN ISO 14896 bestimmt wird. In einer weiteren bevorzugten Ausführungsform des erfindungsgemäßen Verfahrens ist der NCO-Gruppengehalt des thermoplastischen Polyurethans (TPU-2) um mindestens 30 %, vorzugsweise um mindestens 40 % und besonders bevorzugt um mindestens 50% geringer, nachdem das thermoplastische Polyurethan einer Temperatur im Bereich von 10 °C bis 100 °C unter einer Gasatmosphäre ausgesetzt wurden, bezogen auf den NCO-Gruppengehalt des thermoplastischen Polyurethans (TPU-1) bevor dieses einer Temperatur im Bereich von 10 °C bis 100 °C unter einer Gasatmosphäre ausgesetzt wurde, wobei der NCO-Gruppengehalt angelehnt an die DIN EN ISO 14896 bestimmt wird. Angelehnt an die DIN EN ISO 14896 (01. 2009) bedeutet, dass diese Vorschrift mit folgenden Abweichungen durchgeführt wurde: Statt Toluol wird N-Methylpyrrolidon als Lösungsmittel verwendet. Die Konzentration an Dibutylamin und Salzsäure beträgt 0,5 mol/l. Dibutylamin wird in Dimethylsulfoxid statt in Toluol gelöst. Die Salzsäure wird nicht in Wasser, sondern in einem Gemisch aus 85% Isopropanol und 15% Wasser gelöst.

In einer bevorzugten Ausführungsform des erfindungsgemäßen Verfahrens wird das thermoplastische Polyurethan (TPU-1) einer Temperatur im Bereich von 20 °C bis 100 °C, vorzugsweise im Bereich von 30 °C bis 100 °C, besonders bevorzugt im Bereich von 50 °C bis 100 °C und ganz besonders bevorzugt im Bereich von 50 °C bis 90 °C unter Gasatmosphäre ausgesetzt.

In einer bevorzugten Ausführungsform des erfindungsgemäßen Verfahrens ist das thermoplastische Polyurethan (TPU-1 und / oder TPU-2) ein Granulat und weist eine durchschnittliche Größe im Bereich von 2 mm bis 8 mm, vorzugsweise im Bereich von 3 mm bis 7 mm, und besonders bevorzugt im Bereich von 3,5 mm bis 6,5 mm auf.

In einer bevorzugten Ausführungsform des erfindungsgemäßen Verfahrens ist das thermoplastische Polyurethan (TPU-1 und / oder TPU-2) ein Granulat und weist eine Oberfläche im Bereich von 12 mm$^2$ bis 201 mm$^2$, vorzugsweise im Bereich von 28 mm$^2$ bis 154 mm$^2$ und besonders bevorzugt im Bereich von 38 mm$^2$ bis 133 mm$^2$ auf.

In einer bevorzugten Ausführungsform des erfindungsgemäßen Verfahrens weist das thermoplastische Polyurethan (TPU-1 und / oder TPU-2) im Falle von Kugelgranulat einen Durchmesser im Bereich von 2 mm bis 8 mm aufweisen und im Fall von Stranggranulat einen Durchmesser im Bereich von 1 mm bis 7,5 mm auf.

In einer bevorzugten Ausführungsform des erfindungsgemäßen Verfahrens umfasst die Behandlung die folgenden Schritte:

I) Bereitstellen des thermoplastischen Polyurethans (TPU-1) erhältlich oder erhalten durch Umsetzung von wenigstens einem Polyisocyanat mit wenigstens einem Polyol, und
II) Aussetzen des thermoplastischen Polyurethans (TPU-1) einer Temperatur im Bereich von 10 °C bis 100 °C unter einer Gasatmosphäre für einen Zeitraum von 1 Stunde bis 12 Stunden, wobei das Gas der Gasatmosphäre einen Taupunkt von ≤ - 10 °C aufweist, unter Erhalt eines behandelten thermoplastischen Polyurethans (TPU-2).

In einer bevorzugten Ausführungsform des erfindungsgemäßen Verfahrens umfasst die Behandlung die folgenden Schritte:

I) Bereitstellen des thermoplastischen Polyurethans (TPU-1) erhältlich oder erhalten durch Umsetzung von wenigstens einem Polyisocyanat mit wenigstens einem Polyol, und
II) Aussetzen des thermoplastischen Polyurethans (TPU-1) einer Temperatur im Bereich von 10 °C bis 100 °C unter einer Gasatmosphäre für einen Zeitraum von 1 Stunde bis 12 Stunden in einem Silo, wobei das Gas der Gasatmosphäre einen Taupunkt von ≤ - 10 °C aufweist, unter Erhalt eines behandelten thermoplastischen Polyurethans (TPU-2).

In einer bevorzugten Ausführungsform des erfindungsgemäßen Verfahrens umfasst die Behandlung die folgenden Schritte:

I) Bereitstellen des thermoplastischen Polyurethans (TPU-1) erhältlich oder erhalten durch Umsetzung von wenigstens einem Polyisocyanat mit wenigstens einem Polyol, und
II) Aussetzen des thermoplastischen Polyurethans (TPU-1) einer Temperatur im Bereich von 50 °C bis 90 °C unter einer Gasatmosphäre für einen Zeitraum von 1 Stunde bis 12 Stunden, wobei das Gas der Gasatmosphäre einen Taupunkt im Bereich von - 15 °C bis - 35 °C aufweist, unter Erhalt eines behandelten thermoplastischen Polyurethans (TPU-2).

In einer bevorzugten Ausführungsform des erfindungsgemäßen Verfahrens umfasst die Behandlung die folgenden Schritte:

I) Bereitstellen des thermoplastischen Polyurethans (TPU-1) erhältlich oder erhalten durch Umsetzung von wenigstens einem Polyisocyanat mit wenigstens einem Polyol, und
II) Aussetzen des thermoplastischen Polyurethans (TPU-1) einer Temperatur im Bereich von 50 °C bis 90 °C unter einer Gasatmosphäre für einen Zeitraum von 1 Stunde bis 12 Stunden in einem Silo, wobei das Gas der Gasatmosphäre einen Taupunkt im Bereich von - 15 °C bis - 35 °C aufweist, unter Erhalt eines behandelten thermoplastischen Polyurethans (TPU-2).

Weiterhin offenbart ist ein thermoplastisches Polyurethan (TPU-2), erhalten oder erhältlich nach dem erfindungsgemäßen Verfahren.

Weiterhin offenbart sind die nach dem erfindungsgemäßen, kontinuierlichen Verfahren hergestellten thermoplastisch verarbeitbaren Polyurethane (TPU-2) und deren Verwendung zur Herstellung von Formteilen mittels Spritzgießen, sowie Herstellung von Filmen, Folien, Schläuchen, Rohren und Kabelummantelungen mittels Extrudieren und Herstellung von Beschichtungen mittels Kalandrieren.

Weiterhin offenbart ist die Verwendung des erfindungsgemäßen thermoplastischen Polyurethans (TPU-2) zur Herstellung einer Zusammensetzung, einer thermoplastischen Formmasse, eines Formkörpers, einer Folie eines Films und / oder einer Faser.

Weiterhin offenbart ist die Verwendung des erfindungsgemäßen Verfahrens zur Herstellung von thermoplastischem Polyurethan (TPU-2).

Weiterhin offenbart ist die Verwendung des erfindungsgemäßen Verfahrens zur Umwandlung von thermoplastischem Polyurethan (TPU-1) in von thermoplastisches Polyurethan (TPU-2).

Weiterhin offenbart ist die Verwendung des erfindungsgemäßen Verfahrens zur Behandlung von thermoplastischem Polyurethan (TPU-1).

Weitere Ausführungsformen der vorliegenden Erfindung sind den Ansprüchen und den Beispielen zu entnehmen.

Die nachfolgenden Beispiele dienen der Veranschaulichung der Erfindung.

**Beispiele**

Verwendete TPU Produkte

| | |
|---|---|
| Desmopan 385S: | Aromatisches, esterbasiertes thermoplastisches Polyurethan der Covestro AG mit einer Shore A Härte von 85 |
| Desmopan 2590A: | Aromatisches, esterbasiertes thermoplastisches Polyurethan der Covestro AG mit einer Shore A Härte von 90 |
| Desmopan 192A: | Aromatisches, esterbasiertes thermoplastisches Polyurethan der Covestro AG mit einer Shore A Härte von 92 |
| Desmopan 85085A: | Aliphatisches, ester- und etherbasiertes thermoplastisches Polyurethan der Covestro AG mit einer Shore A Härte von 85 |
| Desmopan 9370AU: | Aromatisches, etherbasiertes thermoplastisches Polyurethan der Covestro AG mit einer Shore A Härte von 70 |
| Desmopan 6080A: | Aromatisches, etherbasiertes thermoplastisches Polyurethan der Covestro AG mit einer Shore A Härte von 80 |
| Desmopan 9665DU: | Aromatisches, etherbasiertes thermoplastisches Polyurethan der Covestro AG mit einer Shore D Härte von 65 |

Zur Beurteilung des Einflusses der verwendeten Förder- und Trocknungsluft auf die Eigenschaften der jeweiligen TPU Produkte, wurden Proben unmittelbar nach der Herstellung, Granulation (Stranggranulierung oder Unterwassergranulierung, wird bei den nachfolgenden Versuchen angegeben) und anschließender Vortrocknung mittels einer Schwingsiebabsaugung oder eines Zentrifugaltrockners (die Art der Vortrocknung ist jeweils bei den nachfolgenden Versuchen angegeben) gezogen. Die jeweils TPU Proben wurden dann einerseits mit Umgebungsluft, deren Luftfeuchtigkeit gemäß den klimatischen äußeren Bedingungen schwankt und andererseits mit Trockenluft (Taupunkt - 25 °C) 30 Minuten bei 110 °C getrocknet. Die Trockenluft mit einem konstanten Taupunkt von - 25 °C wurde mit einem Rotationsentfeuchter generiert. Dabei wurde der feuchte Eingangsgasstrom (Luftstrom) durch ein rotierendes, mit Adsorptionsmittel beschichtetes, Sorptionsrad geleitet und auf diese Weise getrocknet. Der Taupunkt des Gases (des Luftstroms) am Ausgang des Rotationsentfeuchters, d.h. nach der Trocknung, wurde kontinuierlich mittels Sensoren gemessen, sodass das Gas jederzeit einen konstanten Taupunkt aufwies.. Für die Trocknung der Proben wurde einerseits ein Trockenlufttrockner der Firma Helios und andererseits ein "Turb etuve" Umlufttrockner der Firma Cerco-Semip verwendet. Der Helios-Trockner arbeitete mit Trockenluft, mit einem konstanten Taupunkt von -25 °C. Für die Trocknung der Granulatproben wurde eine Luftmenge von 250 l/min gewählt. Der Turb Etuve Trockner von Cerco-Semip nutzt zur Trocknung Umgebungsluft, die mittels einer Heizspirale erhitzt wird. Für die Umwälzung der Luft sorgt ein Ventilator. Es wurde jeweils 1 kg Probe für 30 Minuten bei 110 °C getrocknet. Bei beiden Trocknern umströmte die jeweilige Luft unter Normaldruck (1013,25 hPa) das jeweilige Granulat. Nach dem Trocknen wurden die NCO-Gehalte, die Lösungsviskositäten, der Schmelzflussindex (MVR), und die mechanischen Eigenschaften der TPU-Proben bestimmt. Von einigen Proben wurde noch die Molekulargewichtsverteilung mittel Gelpermeationschromatographie bestimmt. Die entsprechenden Werte vor der Trocknung wurden nicht bestimmt, weil es sich um die gleiche Ausgangsprobe für beide Trocknungsmethoden handelte. Vor der Trocknung wurde lediglich der NCO-Gehalt bestimmt, um die Abnahme durch die Trocknung zu ermitteln.

**Testbedingungen:**

Zugversuch:

Der Zugversuch erfolgte an S1-Stäben [entspricht Prüfkörper Typ 5 nach EN ISO 527-1 (02. 2012), ausgestanzt aus Spritzplatten] oder als Stäbe direkt gespritzt gemäß DIN 53504 (03. 2017) mit einer Zuggeschwindigkeit von 200 mm/min.

Schmelzflussindex (MVR)

Die MVR Messungen wurden bei je nach Produkt bei unterschiedlichen Temperaturen mit 10 kg (98N) Auflagegewicht und 5 min. Vorheizzeit gemäß ISO 1133 (06. 2005) mit einem MVR Gerät der Fa. Göttfert, Modell MP-D, gemessen. Die Messtemperaturen sind bei den jeweiligen Produkten in den nachfolgenden Tabellen angegeben.

Lösungsviskosität

Die Messung der Lösungsviskosität erfolgte mit einem Ubbelohde-Viskosimeter vom Typ 50110 in Anlehnung an die DIN 51562-1 (01. 1999). Es wurden 99,7 g N-Methyl-2-pyrrolidon mit 0,1% Dibutylamin und 0,4 g TPU-Granulat eingewogen. Die Proben wurden auf einem Magnetrührer bei ca. 70 °C ca. 1 Stunde gerührt und über Nacht auf Raumtemperatur abgekühlt. Die Proben und ein Blindwert (reines Lösungsmittel) wurden bei 25 °C an einem Viskositätsmessplatz der Fa. Schott gemessen. Die relative Lösungsviskosität berechnet sich aus der Zeit (Lösung) dividiert durch die Zeit (Lösungsmittel). Der Viskositätsmessplatz der Fa. Schott besteht aus: Viskositätsmessplatz AVS 400, Messstativ ASV/S, Glasthermostat, Ubbelohde-Viskosimeter Typ 50110.

NCO-Gehalt:

Angelehnt an die DIN EN ISO 14896 (01. 2009) mit folgenden Abweichungen:
Statt Toluol wird N-Methylpyrrolidon als Lösungsmittel verwendet. Die Konzentration an Dibutylamin und Salzsäure beträgt 0,5 mol/l. Dibutylamin wird in Dimethylsulfoxid statt in Toluol gelöst. Die Salzsäure wird nicht in Wasser, sondern in einem Gemisch aus 85% Isopropanol und 15% Wasser gelöst.

Molekulargewichte

Die Bestimmung der zahlenmittleren Molekulargewichte $M_n$ und gewichtsmittleren Molekulargewichte $M_w$ der thermoplastischen Polyurethane erfolgte, gelöst in HFIP (Hexafluorisopropanol ) mittels GPC. Die Bestimmung des Molekulargewichts erfolgte mittels einer Säulenkombination aus einer Vorsäule und 3 hintereinandergeschalteter GPC-Säulen 30 × 8 mm: 1000 Å PSS PFG 7μ, 300 Å PSS PFG 7μ und 100 Å PSS PFG 7μ. Fluß: 1 ml/min HFIP (fluorochem, 99,9%) mit Kaliumtrifluoracetat von Aldrich, 98%, (3 g auf 400 ml)), Smarline RI-Detektor 2300 Knauer. Eingespritzt werden 100 μl Probelösung, Konzentration 2 mg/ml. Die Proben werden vor der Messung durch einen 0,45 μm PTFE-Filter gegeben. Gemessen wird bei Raumtemperatur, kalibriert mit einem PMMA-Standard-Kit von PSS (von 102 - 981000 g/mol im Peakmaximum). Als Vergleichsgas wurde bei den Versuchen Umgebungsluft eingesetzt. Die Umgebungsluft hatte im Zeitraum der Messungen einen Taupunkt von 17,2 °C, bei einer relativen Luftfeuchtigkeit von 84%, bei einem Druck von 1014 hPa und einer Temperatur von 20 °C, die absolute Luftfeuchte betrug 14,5 g/m$^3$. Die trockene Prozessluft, als Trockenluft bezeichnet, hatte im Zeitraum der Messungen einen Taupunkt von -25 °C, bei einer relativen Luftfeuchtigkeit von 3,4%, bei einem Druck von 1014 hPa und einer Temperatur von 20 °C, die absolute Luftfeuchte betrug 0,6 g/m$^3$.

**Beispiel 1:** Desmopan 2590A: Herstellung in einem Reaktionsextruder, Unterwassergranulierung, Vortrocknung mittels Zentrifugaltrockner.

Die TPU-Probe wurde geteilt und wie oben beschrieben wurde ein Teil der TPU-Probe mit Umgebungsluft und der andere Teil der TPU-Probe mit Trockenluft getempert.
Ergebnisse:

**Tabelle 1:** Ergebnisse der Temperns von Desmopan 2590A mit Umgebungsluft und Trockenluft. Mit Pd ist die Polydispersität gemeint, die sich durch Division von Mw durch Mn ergibt.

| Temperung mit | Rest-NCO Gehalt | Lösungsviskosität | MVR (190 °C) | 100% Modul | Reißfestigkeit | Reißdehnung | GPC-Molekulargewichtsverteilung | | |
|---|---|---|---|---|---|---|---|---|---|
| | [Gew.-%] | | [ml / 10 min] | [MPa] | [MPa] | [%] | Mn | Mw | Pd |
| Vor Temperung | 0,132 | | | | | | | | |
| Umgebungsluft | 0,012 | 1,472 | 18,6 | 11,9 | 40,1 | 448 | 63540 | 125200 | 1,97 |
| Trockenluft | 0,007 | 1,487 | 14,8 | 11,5 | 43,2 | 474 | 72660 | 138300 | 1,90 |

Es ist deutlich zu erkennen, dass beim Tempern mit Trockenluft eine geringfügig höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist. Dies belegen auch die Ergebnisse der GPC-Molgewichtsverteilung mit einem höheren Molgewicht der Probe, die mit Trockenluft getempert wurde.

**Beispiel 2:** Desmopan 385S: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.
Ergebnisse:

**Tabelle 2:** Ergebnisse der Temperns von Desmopan 385S mit Umgebungsluft und Trockenluft.

| Temperung mit | Rest NCO-Gehalt | Lösungsviskosität | MVR (200 °C) | 100%-Modul | Reißfestigkeit | Reißdehnung |
|---|---|---|---|---|---|---|
| | [Gew.-%] | | [ml / 10 min] | [MPa] | [MPa] | [%] |
| Vor Temperung | 0,186 | | | | | |
| Umgebungsluft | 0,065 | 1,48 | 19 | 5,1 | 45,8 | 649 |
| Trockenluft | 0,068 | 1,56 | 13 | 5,1 | 51,2 | 627 |

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist.

**Beispiel 3:** Desmopan 192: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.
Ergebnisse:

**Tabelle 3:** Ergebnisse der Temperns von Desmopan 192 mit Umgebungsluft und Trockenluft. Mit Pd ist die Polydispersität gemeint, die sich durch Division von Mw durch Mn ergibt.

| Temperung mit | Rest-NCO Gehalt | Lösungsviskosität | MVR (190 °C) | 100% Modul | Reißfestigkeit | Reißdehnung | GPC-Molekulargewichtsverteilung | | |
|---|---|---|---|---|---|---|---|---|---|
| | [Gew.-%] | | [ml / 10 min] | [MPa] | [MPa] | [%] | Mn | Mw | Pd |
| Vor Temperung | 0,223 | | | | | | | | |
| Umgebungsluft | 0,073 | 1,476 | 32,2 | 9,0 | 52,6 | 611 | 97030 | 246200 | 2,11 |
| Trockenluft | 0,092 | 1,503 | 25,2 | 9,2 | 55,8 | 605 | 116800 | 207700 | 2,14 |

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten unter 0,1%. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist. Dies belegen auch die Ergebnisse der GPC-Molgewichtsverteilung mit einem höheren Molgewicht der Probe, die mit Trockenluft getempert wurde.

**Beispiel 4:** Desmopan 85085A: Herstellung in einem Reaktionsextruder, Unterwassergranulierung, Vortrocknung mittels Zentrifugaltrockner.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

**Tabelle 4:** Ergebnisse der Temperns von Desmopan 85085A mit Umgebungsluft und Trockenluft.Mit Pd ist die Polydispersität gemeint, die sich durch Division von Mw durch Mn ergibt.

| Temperung mit | Rest-NCO Gehalt | Lösungsviskosität | MVR (180 °C) | 100% Modul | Reißfestigkeit | Reißdehnung | GPC-Molgewichtsverteilung | | |
|---|---|---|---|---|---|---|---|---|---|
| | [Gew.-%] | | [ml / 10 min] | [MPa] | [MPa] | [%] | Mn | Mw | Pd |
| Vor Temperung | 0,226 | | | | | | | | |
| Umgebungsluft | 0,087 | 1,52 | 49 | 6,2 | 37,8 | 918 | 123470 | 244200 | 1,98 |
| Trockenluft | 0,085 | 1,71 | 32 | 6,4 | 50,0 | 846 | 223820 | 427500 | 1,91 |

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist. Dies belegen auch die Ergebnisse der GPC-Molgewichtsverteilung mit einem höheren Molgewicht der Probe, die mit Trockenluft getempert wurde.

**Beispiel 5:** Desmopan 9370AU: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.
Ergebnisse:

**Tabelle 5:** Ergebnisse des Temperns von Desmopan 9370AU mit Umgebungsluft und Trockenluft.

| Temperung mit | Rest-NCO Gehalt vor der Temperung | Lösungsviskosität | MVR (190 °C) | 100% Modul | Reißfestigkeit | Reißdehnung |
|---|---|---|---|---|---|---|
| | [Gew.-%] | | [ml / 10 min] | [MPa] | [MPa] | [%] |
| Vor Temperung | 0,188 | | | | | |
| Umgebungsluft | 0,072 | 1,41 | 30 | 2,7 | 27,2 | 836 |
| Trockenluft | 0,068 | 1,44 | 20 | 2,8 | 31,3 | 787 |

Es ist deutlich zu erkennen, dass beim Tempern mit Trockenluft eine geringfügig höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist.

**Beispiel 6:** Desmopan 6080A: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.
Ergebnisse:

**Tabelle 6:** Ergebnisse des Temperns von Desmopan 6080A mit Umgebungsluft und Trockenluft. Mit Pd ist die Polydispersität gemeint, die sich durch Division von Mw durch Mn ergibt.

| Temperung mit | Rest-NCO Gehalt | Lösungsviskosität | MVR (190 °C) | 100% Modul | Reißfestigkeit | Reißdehnung | GPC-Molekulargewichtsverteilung | | |
|---|---|---|---|---|---|---|---|---|---|
| | [Gew.-%] | | [ml / 10 min] | [MPa] | [MPa] | [%] | Mn | Mw | Pd |
| Vor Temperung | 0,330 | | | | | | | | |
| Umgebungsluft | 0,143 | 1,404 | 25,8 | 5,9 | 23,9 | 672 | 159100 | 369500 | 2,32 |
| Trockenluft | 0,144 | 1,488 | 11,3 | 6,0 | 26,8 | 552 | 226600 | 602700 | 2,66 |

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf gleichem Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist. Dies belegen auch die Ergebnisse der GPC-Molgewichtsverteilung mit einem deutlich höheren Molgewicht der Probe, die mit Trockenluft getempert wurde.

Beispiel 7: Desmopan 9665DU: Herstellung in einem Reaktionsextruder, Granulierung mittels Stranggranulation und Vortrocknung mittels Schwingsiebabsaugung.

Die TPU-Probe wurde geteilt und wie oben beschrieben wurde ein Teil der TPU-Probe mit Umgebungsluft und der andere Teil der TPU-Probe mit Trockenluft getempert.

Ergebnisse:

Tabelle 7: Ergebnisse des Temperns von Desmopan 9665DU mit Umgebungsluft und Trockenluft.

| Temperung mit | Rest-NCO Gehalt vor der Temperung | Lösungsviskosität | MVR (210 °C) | 100% Modul | Reißfestigkeit | Reißdehnung |
|---|---|---|---|---|---|---|
| | [Gew.-%] | | [ml / 10 min] | [MPa] | [MPa] | [%] |
| Vor Temperung | 0,343 | | | | | |
| Umgebungsluft | 0,126 | 1,50 | 12 | 27,6 | 53,0 | 836 |
| Trockenluft | 0,131 | 1,62 | 8 | 29,0 | 54,7 | 787 |

Es ist deutlich zu erkennen, dass beim Tempern mit Trockenluft eine höhere Lösungsviskosität, ein geringerer MVR-Wert und eine höhere Reißfestigkeit erhalten werden. Dies deutet auf eine lineare Erhöhung des Molgewichts während des Temperns hin. Der Rest-NCO Gehalt nimmt im Vergleich zum Ausgangswert nach dem Tempern deutlich ab und liegt nach beiden Temperarten auf einem ähnlichen Niveau. Da bei Verwendung von Trockenluft beim Tempern eine höhere Lösungsviskosität und eine höhere Reißfestigkeit resultiert, ist die Verringerung des Rest NCO-Gehaltes auf eine lineare Molekulargewichtserhöhung zurückzuführen. Bei der Verringerung des Rest NCO-Gehaltes nach dem Tempern mit Umgebungsluft muss daher auch eine Reaktion eines Teils der NCO-Gruppen mit Wasser stattgefunden haben, was unerwünscht ist.

Die aufgeführten Beispiele 1-7 zeigen deutlich den Vorteil auf, den man erzielt, wenn TPU Proben mit Trockenluft anstelle von Umgebungsluft behandelt werden.

**Patentansprüche**

1. Verfahren zur Behandlung von thermoplastischem Polyurethan, wobei die Behandlung die folgenden Schritte umfasst:

I) Bereitstellen des thermoplastischen Polyurethans (TPU-1) erhältlich oder erhalten durch Umsetzung von wenigstens einem Polyisocyanat mit wenigstens einem Polyol, und

II) Aussetzen des thermoplastischen Polyurethans (TPU-1) einer Temperatur im Bereich von 10 °C bis 150 °C unter einer Gasatmosphäre, wobei das Gas der Gasatmosphäre einen Taupunkt von $\leq$ - 10 °C aufweist, unter Erhalt eines behandelten thermoplastischen Polyurethans (TPU-2),
**dadurch gekennzeichnet, dass**

Schritt II) in einem Behälter oder Silo erfolgt und
das thermoplastische Polyurethan (TPU-1) über einen Schlauch und / oder eine Rohrleitung dem Behälter oder Silo für Schritt II) zugeführt wird, wobei weiterhin der Schlauch und / oder die Rohrleitung jeweils eine Gasatmosphäre aufweisen und das Gas der Gasatmosphäre einen Taupunkt von $\leq$ - 10 °C aufweist.

2. Verfahren nach Anspruch 1, wobei das thermoplastische Polyurethan (TPU-1) vor der Bereitstellung in Schritt I) ein mehrstufiges Verfahren umfassend die folgenden Schritte durchlaufen hat:

   a) Extrudieren des thermoplastischen Polyurethans (TPU-1),
   b) Granulieren des extrudierten thermoplastischen Polyurethans (TPU-1) aus Schritt a), und
   c) Trocknen des thermoplastischen Polyurethans (TPU-1) aus Schritt b).

3. Verfahren nach einem der Ansprüche 1 oder 2, **dadurch gekennzeichnet, dass** das Gas der Gasatmosphäre einen Taupunkt von ≤ - 15 °C, vorzugsweise von ≤ - 20 °C, und besonders bevorzugt von ≤ - 25 °C aufweist.

4. Verfahren nach einem der Ansprüche 1 bis 3, **dadurch gekennzeichnet, dass** das thermoplastische Polyurethan (TPU-1) der Temperatur für einem Zeitraum von 1 Stunde bis 12 Stunden, vorzugsweise einem Zeitraum von 2 Stunden bis 10 Stunden, besonders bevorzugt einem Zeitraum von 3 Stunden bis 9 Stunden, ganz besonders bevorzugt einem Zeitraum von 4 Stunden bis 8 Stunden und noch bevorzugter einem Zeitraum von 4 Stunden bis 7 Stunden unter Gasatmosphäre ausgesetzt wird.

5. Verfahren nach einem der Ansprüche 1 bis 4, **dadurch gekennzeichnet, dass** das Gas der Gasatmosphäre Luft, ein inertes Gas, oder ein Gemisch aus Luft und einem inerten Gas ist, wobei das inerte Gas vorzugsweise ausgewählt ist aus der Gruppe bestehend aus Stickstoff, Kohlenstoffdioxid, Argon und / oder einer Mischung aus mindestens zwei hiervon.

6. Verfahren nach einem der Ansprüche 1 bis 5, **dadurch gekennzeichnet, dass** der Schlauch und / oder die Rohrleitung jeweils eine Temperatur im Bereich von 10 °C bis 100 °C aufweisen.

7. Verfahren nach einem der Ansprüche 1 bis 6, **dadurch gekennzeichnet, dass** der Taupunkt des Gases der Gasatmosphäre in Schritt II) bei Eintritt in den Behälter oder Silo konstant gehalten wird.

8. Verfahren nach einem der Ansprüche 1 bis 7, **dadurch gekennzeichnet, dass** der Druck der Gasatmosphäre im Bereich von 0,01 bar absolut bis 5,0 bar absolut, vorzugsweise im Bereich von 0,1 bar absolut bis 4,5 bar absolut und besonders bevorzugt im Bereich von 0,2 bis 3,5 bar absolut liegt.

9. Verfahren nach einem der Ansprüche 1 bis 8, **dadurch gekennzeichnet, dass** das thermoplastische Polyurethan (TPU-1 und TPU-2) von dem Gas der Gasatmosphäre umströmt wird, vorzugsweise durch das Gas umgewälzt wird.

10. Verfahren nach einem der Ansprüche 1 bis 9, **dadurch gekennzeichnet, dass** das Verhältnis von dem Volumen des Gases der Gasatmosphäre zu dem Volumen des thermoplastischen Polyurethans (TPU-1) im Bereich von 1 bis 1000, vorzugsweise im Bereich von 1,5 bis 500, und besonders bevorzugt im Bereich von 2 bis 100 liegt.

11. Verfahren nach einem der Ansprüche 1 bis 10, **dadurch gekennzeichnet, dass** der NCO-Gruppengehalt des thermoplastischen Polyurethans (TPU-2) um mindestens 30 %, vorzugsweise um mindestens 40 % und besonders bevorzugt um mindestens 50% geringer ist, als der NCO-Gruppengehalt des thermoplastischen Polyurethans (TPU-1), wobei der NCO-Gruppengehalt angelehnt an die DIN EN ISO 14896 bestimmt wird.

12. Verfahren nach einem der Ansprüche 1 bis 11, **dadurch gekennzeichnet, dass** das thermoplastische Polyurethan (TPU-1) einer Temperatur im Bereich von 20 °C bis 150 °C, vorzugsweise im Bereich von 25 °C bis 130 °C, besonders bevorzugt im Bereich von 30 °C bis 110 °C und ganz besonders bevorzugt im Bereich von 30 °C bis 100 °C unter Gasatmosphäre ausgesetzt wird.

**Claims**

1. Process for the treatment of thermoplastic polyurethane, wherein the treatment comprises the following steps:

   I) providing the thermoplastic polyurethane (TPU-1) obtainable or obtained by reacting at least one polyisocyanate with at least one polyol, and
   II) subjecting the thermoplastic polyurethane (TPU-1) to a temperature in the range from 10°C to 150°C under a gas atmosphere, wherein the gas of the gas atmosphere having a dew point of ≤ -10°C, to obtain a treated thermoplastic polyurethane (TPU-2),

**characterized in that**

> step II) is carried out in a vessel or silo and
> the thermoplastic polyurethane (TPU-1) is supplied to the vessel or silo for step II) via a hose and/or a pipeline, wherein in addition the hose and/or the pipeline each comprise a gas atmosphere and the gas of the gas atmosphere has a dew point of $\leq$ -10°C.

2. Process according to Claim 1, wherein the thermoplastic polyurethane (TPU-1) prior to being provided in step I) has undergone a multi-stage process comprising the following steps:

> a) extruding the thermoplastic polyurethane (TPU-1),
> b) pelletizing the extruded thermoplastic polyurethane (TPU-1) from step a), and
> c) drying the thermoplastic polyurethane (TPU-1) from step b).

3. Process according to either of Claims 1 and 2, **characterized in that** the gas of the gas atmosphere has a dew point of $\leq$ -15°C, preferably of $\leq$ -20°C, and particularly preferably of $\leq$ -25°C.

4. Process according to any of Claims 1 to 3, **characterized in that** the thermoplastic polyurethane (TPU-1) is subjected to the temperature for a period of from 1 hour to 12 hours, preferably a period of from 2 hours to 10 hours, particularly preferably a period of from 3 hours to 9 hours, very particularly preferably a period of from 4 hours to 8 hours and even more preferably a period of from 4 hours to 7 hours under gas atmosphere.

5. Process according to any of Claims 1 to 4, **characterized in that** the gas of the gas atmosphere is air, an inert gas, or a mixture of air and an inert gas, wherein the inert gas is preferably selected from the group consisting of nitrogen, carbon dioxide, argon and/or a mixture of at least two of these.

6. Process according to any of Claims 1 to 5, **characterized in that** the hose and/or the pipeline each have a temperature in the range from 10°C to 100°C.

7. Process according to any of Claims 1 to 6, **characterized in that** the dew point of the gas of the gas atmosphere in step II) is kept constant on entry into the vessel or silo.

8. Process according to any of Claims 1 to 7, **characterized in that** the pressure of the gas atmosphere is in the range from 0.01 bar absolute to 5.0 bar absolute, preferably in the range from 0.1 bar absolute to 4.5 bar absolute and particularly preferably in the range from 0.2 to 3.5 bar absolute.

9. Process according to any one of claims 1 to 8, **characterized in that** the thermoplastic polyurethane (TPU-1 and TPU-2) is flowed around by the gas of the gas atmosphere, preferably circulated by the gas.

10. Process according to any of Claims 1 to 9, **characterized in that** the ratio of the volume of the gas of the gas atmosphere to the volume of the thermoplastic polyurethane (TPU-1) is in the range from 1 to 1000, preferably in the range from 1.5 to 500, and particularly preferably in the range from 2 to 100.

11. Process according to any of Claims 1 to 10, **characterized in that** the NCO group content of the thermoplastic polyurethane (TPU-2) is at least 30%, preferably at least 40% and particularly preferably at least 50% lower than the NCO group content of the thermoplastic polyurethane (TPU-1), wherein the NCO group content being determined in accordance with DIN EN ISO 14896.

12. Process according to any of Claims 1 to 11, **characterized in that** the thermoplastic polyurethane (TPU-1) is subjected to a temperature in the range from 20°C to 150°C, preferably in the range from 25°C to 130°C, particularly preferably in the range from 30°C to 110°C and very particularly preferably in the range from 30°C to 100°C under a gas atmosphere.

**Revendications**

1. Procédé de traitement de polyuréthane thermoplastique, le traitement comprenant les étapes suivantes :

I) mise à disposition du polyuréthane thermoplastique (TPU-1) obtenu ou pouvant être obtenu par transformation d'au moins un polyisocyanate avec au moins un polyol et

II) soumission du polyuréthane thermoplastique (TPU-1) à une température dans la plage de 10°C à 150°C sous une atmosphère gazeuse, le gaz de l'atmosphère gazeuse présentant un point de rosée ≤ -10°C, avec obtention d'un polyuréthane thermoplastique traité (TPU-2),

**caractérisé en ce que**

l'étape II) a lieu dans un récipient ou dans un silo et le polyuréthane thermoplastique (TPU-1) est introduit par l'intermédiaire d'un flexible et/ou d'une conduite tubulaire dans le récipient ou le silo pour l'étape II), le flexible et/ou la conduite tubulaire présentant à chaque fois une atmosphère gazeuse et le gaz de l'atmosphère gazeuse présentant un point de rosée ≤ - 10°C.

2. Procédé selon la revendication 1, le polyuréthane thermoplastique (TPU-1), avant la mise à disposition dans l'étape I), étant passé dans un procédé à plusieurs étapes comprenant les étapes suivantes :

   a) extrusion du polyuréthane thermoplastique (TPU-1),
   b) granulation du polyuréthane thermoplastique (TPU-1) extrudé de l'étape a) et
   c) séchage du polyuréthane thermoplastique (TPU-1) de l'étape b).

3. Procédé selon l'une des revendications 1 ou 2, **caractérisé en ce que** le gaz de l'atmosphère gazeuse présente un point de rosée ≤ -15°C, de préférence ≤ -20°C et de manière particulièrement préférée ≤ -25°C.

4. Procédé selon l'une des revendications 1 à 3, **caractérisé en ce que** le polyuréthane thermoplastique (TPU-1) est soumis à la température pendant une période de 1 heure à 12 heures, de préférence pendant une période de 2 heures à 10 heures, de manière particulièrement préférée pendant une période de 3 heures à 9 heures, de manière tout particulièrement préférée pendant une période de 4 heures à 8 heures et encore plus préférablement pendant une période de 4 heures à 7 heures sous atmosphère gazeuse.

5. Procédé selon l'une des revendications 1 à 4, **caractérisé en ce que** le gaz de l'atmosphère gazeuse est l'air, un gaz inerte ou un mélange d'air et d'un gaz inerte, le gaz inerte étant de préférence choisi dans le groupe constitué par l'azote, le dioxyde de carbone, l'argon et/ou un mélange d'au moins deux de ceux-ci.

6. Procédé selon l'une des revendications 1 à 5, **caractérisé en ce que** le flexible et/ou la conduite tubulaire présente à chaque fois une température dans la plage de 10°C à 100°C.

7. Procédé selon l'une des revendications 1 à 6, **caractérisé en ce que** le point de rosée du gaz de l'atmosphère gazeuse dans l'étape II) est maintenu constant à l'entrée dans le récipient ou le silo.

8. Procédé selon l'une des revendications 1 à 7, **caractérisé en ce que** la pression de l'atmosphère gazeuse se situe dans la plage de 0,01 bar absolu à 5,0 bars absolus, de préférence dans la plage de 0,1 bar absolu à 4,5 bars absolus et de manière particulièrement préférée dans la plage de 0,2 à 3,5 bars absolus.

9. Procédé selon l'une des revendications 1 à 8, **caractérisé en ce que** le polyuréthane thermoplastique (TPU-1 et TPU-2) est entouré d'un écoulement de gaz de l'atmosphère gazeuse, de préférence mis en circulation par le gaz.

10. Procédé selon l'une des revendications 1 à 9, **caractérisé en ce que** le rapport du volume de gaz de l'atmosphère gazeuse au volume du polyuréthane thermoplastique (TPU-1) se situe dans la plage de 1 à 1000, de préférence dans la plage de 1,5 à 500 et de manière particulièrement préférée dans la plage de 2 à 100.

11. Procédé selon l'une des revendications 1 à 10, **caractérisé en ce que** la teneur en groupes NCO du polyuréthane thermoplastique (TPU-2) est inférieure d'au moins 30%, de préférence d'au moins 40% et de manière particulièrement préférée d'au moins 50% à la teneur en groupes NCO du polyuréthane thermoplastique (TPU-1), la teneur en groupes NCO étant déterminée selon la norme DIN EN ISO 14896.

12. Procédé selon l'une des revendications 1 à 11, **caractérisé en ce que** le polyuréthane thermoplastique (TPU-1) est soumis à une température dans la plage de 20°C à 150°C, de préférence dans la plage de 25°C à 130°C, de manière particulièrement préférée dans la plage de 30°C à 110°C et de manière tout particulièrement préférée dans la plage de 30°C à 100°C sous atmosphère gazeuse.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1964834
- GB 1057018 A
- US 2005043492 A1
- JP 3602668 B
- US 2009326108 A1
- US 5780573 A
- EP 0922552 A1
- DE 10103424 A1
- WO 2006072461 A1
- DE 2901774 A

**In der Beschreibung aufgeführte Nicht-Patentliteratur**

- *Kunststoffe*, 1978, vol. 68, 819
- *Kautschuk, Gummi, Kunststoffe*, 1982, vol. 35, 569
- Polyurethane. **G. BECKER** ; **D. BRAUN**. Kunststoff-Handbuch. Carl Hanser Verlag, 1983, vol. 7
- *Plastikverarbeiter*, 1989, vol. 40
- *Justus Liebigs Annalen der Chemie*, vol. 562, 75-136
- High Polymers. **J.H. SAUNDERS** ; **K.C. FRISCH**. Polyurethane. Interscience Publishers, 1962, vol. XVI
- Taschenbuch der Kunststoff-Additive. Hanser Verlag, 1989